# EUROPEAN PATENT APPLICATION

(11) **EP 1 452 577 A1**
(43) Date of publication of application: **01.09.2004**
(21) Application number: 04100801.2
(22) Date of filing: 01.03.2004
(51) Int. Cl.: C10J 3/86, C10J 3/00

(54) **Method and integrated plant for the production, with the total absence of emissions into the atmosphere, of hydrogen and other technical gases, starting from the gasification of solid refuse**

(30) Priority: 28.02.2003 IT UD20030048
(71) Applicant: PROTEUS Srl, 33100 UDINE (IT)
(72) Inventor: Strizzolo, Andrea, 33100, UDINE (IT)
(74) Representative: Petraz, Gilberto Luigi

(57) **Abstract**

Plant for the production of technical gases, such as hydrogen and carbon dioxide, starting from solid refuse, packaging, even contaminated, and from other waste materials, comprising at least a preparation and separation unit to prepare and separate the materials into at least a first and a second sub-group according to pre-determined parameters. The plant comprises at least a gasification unit arranged downstream of the preparation and separation unit and provided with at least a first reactor (50) into which the first sub-group of materials is able to be introduced in order to be gasified by means of comburent means. The gasification unit comprises at least a second reactor (51) arranged in series and connected to the first reactor (50) and into which the second sub-group of materials is able to be introduced. Introduction means (515) are provided to introduce the gases produced by the first reactor (50) into the second reactor (51).

## Description

### FIELD OF THE INVENTION

The present invention concerns a plant to produce reusable gases, in particular hydrogen and carbon dioxide, starting from solid refuse, packaging, even contaminated, and from other waste materials selected and collected in differentiated manner, according to their chemical-physical properties and the relative calorific power. The plant is also able to process dangerous waste and waste waters, and produce hydrogen in the liquid/gas state for any use whatsoever, industrial/civil, to feed fuel cells, for the production of electric energy, fuel cells for traction, fuel for internal combustion engines for traction, fuel to feed gas turbines, etc. Apart from the hydrogen, the plant allows to re-use all the sub-products, such as water, the carbon dioxide that is separated from the hydrogen, all the waste and residues of the various steps of the process that are made inert and available for the building sector.

### BACKGROUND OF THE INVENTION

A plant is known for the processing and selection of refuse, of various origin, such as plastics, bio-masses or other, which uses as basic technology a gasification process in order to transform the refuse, at high temperatures and by means of comburent agents, into synthesis gases, rich in hydrogen and carbon dioxide.

The refuse is gasified after having been differentiated according to its chemical-physical composition and energy content in order to regulate the gasification conditions adequately.

The gases obtained, comprising mainly hydrogen, carbon monoxide and carbon dioxide, are then transferred outside the plant, where there are units distinct from the gasification unit, and are purified, the carbon monoxide is transformed into carbon dioxide and then they are separated.

The known plant has the disadvantage, however, that it does not provide any form of recovery and re-use of the heat energy contained in the hot gasification gases, so that the plant needs high quantities of heat energy with considerable disadvantages in terms of energy and costs.

The known plant also has the disadvantage that it is not provided with devices for the total recovery of the gasification gases, so that they are emitted into the atmosphere with a high level of pollution and without any limitation on the emission of carbon dioxide.

This known plant also has the disadvantage that upstream of the gasification unit there is no adequate and selective system of differentiated collection so as to identify for every material collected a suitable gasification temperature, with minimum energy waste.

One purpose of the present invention is to achieve a serial plant that allows to recover technical gases, particularly hydrogen, from the solid refuse, with a minimal environmental impact, limited costs and by means of which it is possible to recover the maximum energy content of the refuse.

Another purpose is to achieve a gasification unit able to optimize consumption and in which the energy waste for gasification is minimal.

A further purpose is to achieve an innovative plant without chimneys so that, in fact, emissions into the atmosphere are eliminated.

A further purpose is to achieve a method for processing refuse, packaging, even contaminated, dangerous and non-dangerous refuse, liquid and solid, by means of which it is also possible to recover energy, without any type of solid, liquid or gassy emission.

Another purpose is to achieve a plant wherein it is possible to completely separate the sub-products deriving from the process, both solid, such as scum, powders, residues, etc., making them inert, to be able to use them in the construction field or to recycle them inside the plant itself, and also liquid, such as clean or dirty water that is recycled inside the plant.

Applicant has devised, tested and embodied the present invention to overcome the shortcomings of the state of the art and to obtain these and other purposes and advantages.

### SUMMARY OF THE INVENTION

The present invention is set forth and characterized essentially in the main claims, while the dependent claims describe other innovative characteristics of the invention.

A plant according to the invention for the production of technical gases, such as hydrogen and carbon dioxide, starting from solid refuse, including packaging, even contaminated, liquids and waste materials, comprises at least a first preparation and separation unit to prepare and separate the materials into at least a first and a second sub-group according to pre-determined parameters, such as for example chemical-physical properties, calorific power, class of goods or other. The plant comprises at least a second gasification unit, arranged downstream of the first preparation and separation unit, and provided with at least a first reactor in which the first sub-group of materials is able to be introduced in order to be gasified. The second gasification unit comprises at least a second reactor arranged in series and connected to the first reactor and in which the second sub-group of materials is able to be introduced. Introduction means are provided to introduce the gases produced by the first reactor into the second reactor, so as to use the latent heat of the gases produced to support, with a great energy saving, the gasification reactions which occur in the second reactor.

In a preferential embodiment, the first preparation and separation unit is able to separate the materials into at least a third sub-group and the second gasification unit comprises at least a third reactor arranged in series and connected to the second reactor and in which the third sub-group of materials is able to be introduced. In this case too introduction means are provided to introduce the gases produced by the second reactor into the third reactor.

Advantageously the first reactor is able to operate at a temperature higher than the gasification temperature of said second reactor. Similarly, if the third reactor is provided, the second reactor is able to operate at a temperature higher than the gasification temperature of the third reactor.

In this way, the two or three reactors, which can function either simultaneously or autonomously, working at a respectively decreasing temperature, can exploit to the utmost, for the gasification, the latent heat of the gases exiting from the reactor upstream.

In one embodiment of the invention, the first reactor is designed so as to work at very high temperatures, about 3000-4000°C, and is able to gasify, without risk, even dangerous refuse, such as asbestos, sludge, substances containing chlorinated substances, polychloro-biphenyls, etc.

Moreover, advantageously, the plant comprises an auxiliary service unit connected to the second gasification unit and comprising both means to produce comburent means for gasification and also means to accumulate water to be sent to said first and/or second reactor and/or third reactor, in order to make the gasification reaction take place.

In one form of embodiment, downstream of the second gasification unit, there are provided a unit to make inert all the inorganic materials that are residues of gasification, a unit to purify the gases obtained and a unit to transform and separate the gases.

After being separated, the gases are stored in respective accumulation tanks to be available for subsequent use.

In one form of embodiment of the invention the plant is connected upstream to an information network by means of which the collection of material is managed. By means of a plurality of information transmission units, using GPS (Global Positioning System), GSM (Group Special Mobile) or other technologies, a user sends a request for the collection of particular materials already selected according to the aforesaid parameters. In an operating center, connected to the transmission units, the different request signals are received and coordinated, so that an adequate refuse collection can be provided.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a block diagram of a plant according to the present invention;
- fig. 2 is a block diagram of a refuse collection unit of the plant in fig. 1;
- fig. 3 is a block diagram of a refuse preparation unit of the plant in fig. 1;
- fig. 4 is a block diagram of a refuse gasification unit of the plant in fig. 1;
- fig. 5 is a block diagram of a gas purification unit of the plant in fig. 1;
- fig. 6 is a block diagram of a gas transformation and separation unit of the plant in fig. 1;
- fig. 7 is a block diagram of a gas storage unit of the plant in fig. 1;
- fig. 8 is a block diagram of a unit to make the solid refuse inert of the plant in fig. 1;
- fig. 9 is a block diagram of a service unit of the plant in fig. 1;
- fig. 10 is a section view of a detail of the gasification unit in fig. 4.

### DETAILED DESCRIPTION OF A PREFERENTIAL FORM OF EMBODIMENT OF THE INVENTION

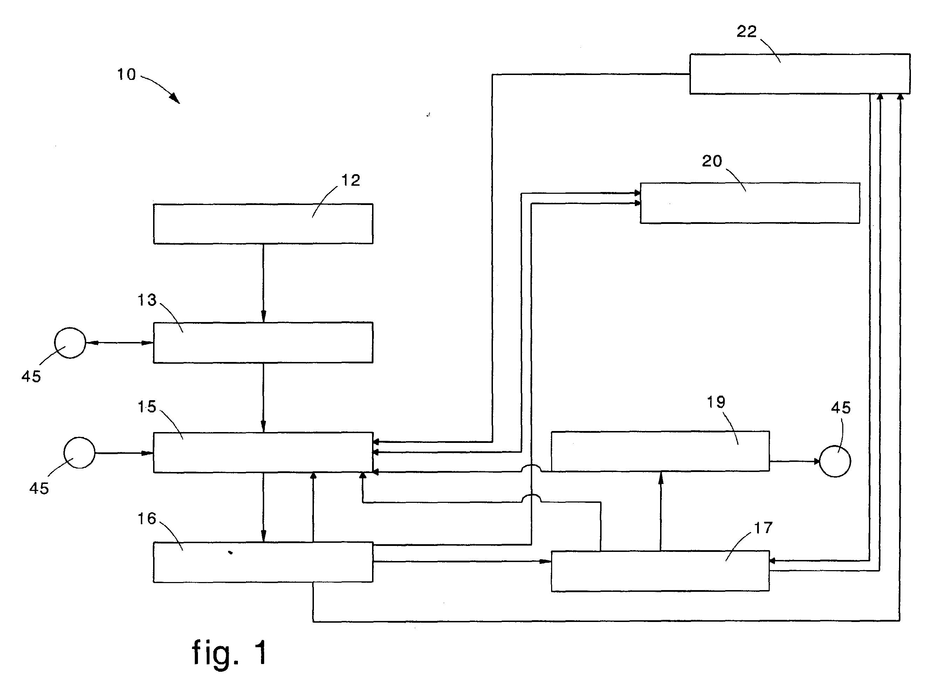

Fig. 1 shows a serial plant according to the invention, denoted by the reference number 10, for the production of gases, such as hydrogen and carbon dioxide, starting from solid refuse, and comprising a plurality of working units connected together in series.

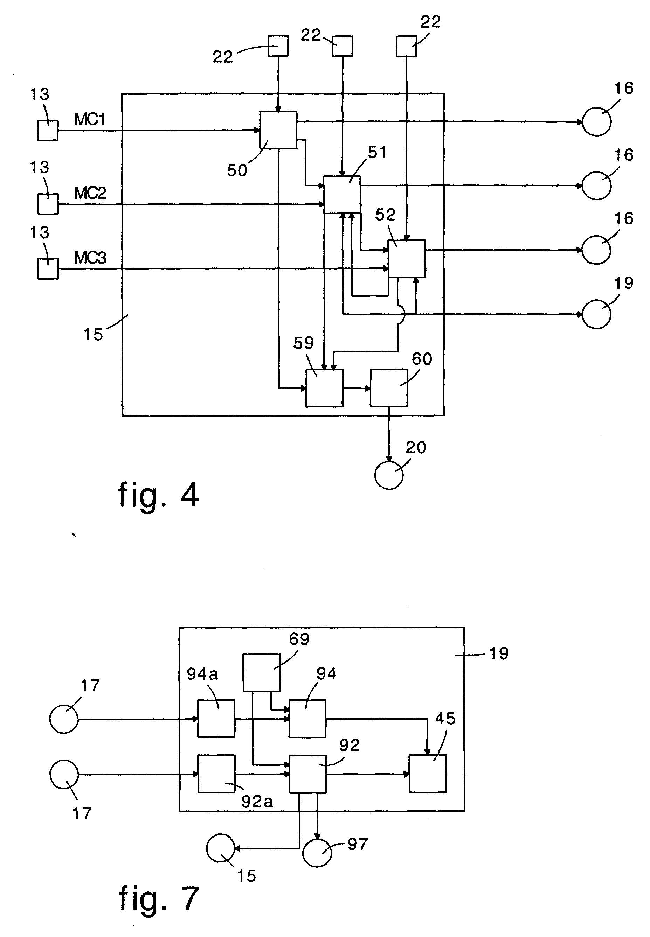

A first unit 12 comprises a system for the differentiated collection of refuse according to its chemical-physical properties and energy content; a second preparation and separation unit 13 which homogenizes and stores the refuse which constitutes the combustible material MC that can be used in the subsequent units; a third gasification unit 15 comprising a plurality of reactors 50, 51, 52 (fig. 4), for example three, to produce the gases; a fourth unit 16 in which the gases obtained are purified; a fifth unit 17 in which the gases are transformed and separated; a sixth unit 19 in which the gases are stored and distributed; a seventh unit 20 in which all the sub-products that cannot be gasified are made inert and recovered; an eighth unit 22 in which auxiliary service plants are provided, able to provide services to the other units of the plant 10, such as for example comburent agents, reagents, or other.

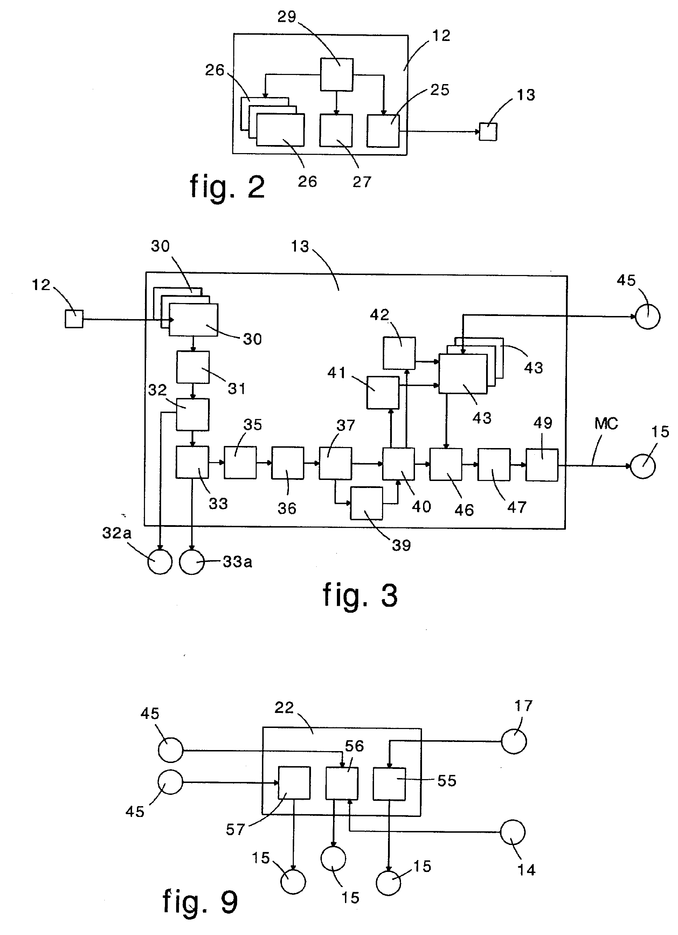

The first unit 12 (fig. 2) comprises, for example, a telematic platform based on WEB technology, which guarantees to a user, by means of a network service and call center, information, services and continuous assistance concerning every kind of environmental problem and hence also the collection of differentiated refuse. To be more exact, for the collection of refuse, each user is provided with transmission devices to send a request for refuse collection, and the refuse collection vehicles are equipped with devices 25 able to control the position of the vehicle and direct weight of the refuse at the moment it is collected. A collection container 26 is arranged at a user's home and is equipped with an electronic detection unit able to interface with the devices 25, in order to determine the type of refuse.

The operating center 27 is able to update in real time the travel of the refuse collection vehicles, for example with satellite systems 29, according to the requests received for refuse collection and their homogeneity.

The second unit 13 (fig. 3) is connected to the first unit 12 to receive the refuse. The second unit 13 is provided with devices for weighing and controlling the refuse, by means of which it is possible to codify the refuse and store it selectively, according to its chemical-physical characteristics and energy content, in relative areas 30, so as to obtain a homogeneity of the materials collected for subsequent processes. The second unit 13 also comprises shredding apparatuses 31 able to homogenize the size of the already selected refuse, so that it can be mixed better with other products later. The second unit 13 also comprises a demetalizer device 32, which automatically provides to purify the material of possible metals, either of iron or not, and to send them to suitable containers 32a, and a pneumatic separator 33, of a known type, which is able to extract non combustible inert refuse that might be present and to send it to a container 33a, separating it from the combustible materials MC.

In this way a plurality of combustible materials MC are obtained which have different energy contents, each of which is stored in a corresponding extractor silo 35, which is provided with a discharge mouth equipped with metering screws 36 which feed a helical mixer 37. The metering screws 36 allow to extract the material in quantities that vary according to the type of combustible mix to be obtained. The percentages of material at outlet are controlled by a suitable computer which manages them. The mixer 37 used is of the helical type which guarantees to obtain a mixture having a constant quality of combustible material MC. In a drier 39 the combustible material MC can be at least partly deprived of water.

The second unit 13 also comprises a transporter group 40 able to transport the combustible material MC alternatively to a layering device 41, able to extrude and bag the material, to a pressing and packing apparatus 42, or directly to the third unit 15.

In the first two cases, the combustible material MC in the form of wafers or fluff is packed into suitable bales, pressed and covered with nylon, so as to allow a better protection of the product from the atmospheric agents, and deposited in appropriate storage areas 43 to wait for their final destination towards the outside 45 of the plant 10. Such storage will allow the plant 10 to have a good functioning autonomy even when the refuse is not differentiated.

The second unit 13 also comprises, upstream of the third unit 15, a sifting device 46, a metering device 47 and a pneumatic transport device 49, which are able to homogenize the size of the combustible material MC with possible fuel arriving from the outside 45.

A control station, not shown in the figures, is connected by means of sensors and calculators to every machine or device of the second unit 13, to control and program the entire process to store and prepare the fuel and every individual apparatus applied.

From the second unit 13 three types of combustible material for example are obtained, in this case MC1, MC2, MC3, each one having different chemical-physical, energy and polluting characteristics and an optimum gasification temperature.

The combustible material MC1 comprises for example compounds with a high energy content, with high gasification temperature, such as for example sludge, industrial refuse, packaging, even contaminated, or other; the combustible material MC2 contains compounds with an intermediate energy content and gasification temperature, such as for example plastic material, fuel derived from refuse or other; while the combustible material MC3 comprises for example carbon, biomasses, wood, processed wood, etc., with a lower gasification temperature.

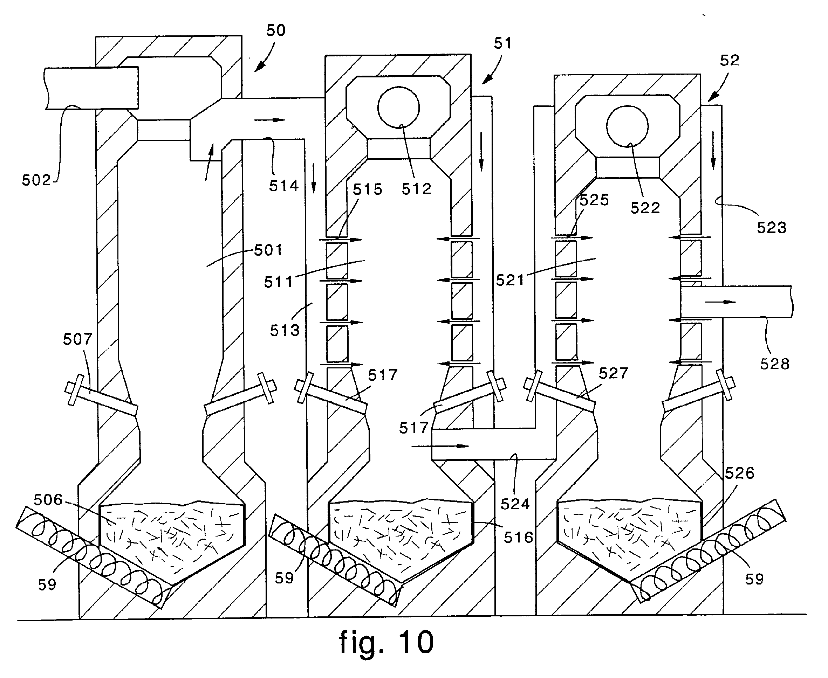

The third unit 15 (fig. 10) comprises three reactors 50, 51, 52, connected together in series, which are able to gasify, in this case at decreasing temperatures, respectively the combustible material MC1, MC2, MC3.

Each of the three reactors 50, 51, 52 comprises respectively a tower 501, 511, 521, cylindrical in shape, which is connected to the transport device 49 by means of an introduction pipe 502, 512, 522. Each gasification tower 501, 511, 521 is lined on the inside with refractory material able to resist high temperatures.

The second reactor 51 is also equipped with a chamber 513 that surrounds the tower 511 and with a connection pipe 514 that connects the chamber 513 with the tower 501 of the previous reactor 50. A plurality of injectors 515 connect the chamber 513 with the inside of the tower 511 and are able to introduce therein the gas produced in the tower 501 at very high temperature.

Similarly, the third reactor 52 is equipped with a chamber 523 that surrounds the respective tower 521 and with a connection pipe 524 that connects the chamber 523 with the tower 511 of the previous reactor 51. A plurality of injectors 525 connect the chamber 523 with the inside of the tower 521 and are able to introduce therein the gas produced in the tower 511 at very high temperature.

The injectors 515, 525 are located on several levels in the respective towers 511, 521 to guarantee a gradual, programmed and planned temperature inside the reactors 51, 52.

Each tower 501, 511, 521 is connected, by means of pipes not shown in the drawings, to an apparatus to accumulate and inject clean water 55 of the eighth unit 22 (fig. 9), and to an apparatus to accumulate and inject dirty water 56, the apparatuses being able to enrich the gasification process, if the humidity contained in the combustible material MC at inlet is not sufficient.

To guarantee an efficient gasification process, pure oxygen is used, produced *in situ* by a substantially known plant 57 for fractioning air, which is arranged in the eighth unit 22, or by means of molecular sieves. The oxygen can be purchased on the market and stored in suitable tanks; alternately, air can be used as an oxidizing agent.

Each of the three towers 501, 511, 521 is equipped on the bottom with a tank 506, 516, 526 to accumulate the waste residues, and is connected to a screw 59, able to transport the waste to a horizontal slidable container or silo 60 (fig. 4) equipped with an internal discharge screw; once full, the silo 60 is sent to the seventh unit 20, as described hereafter.

To be more exact, the first reactor 50 is equipped with plasma torches 507, wherein the plasma generated by the torch is an ionized gas (in this case oxygen) at very high temperature, from 7000 to 14000 °C, which is able to keep about 3000-4000 °C in the lower reaction zone. The first combustible material MC1 is introduced through the introduction pipe 502 and descends into the tower 501. The non-gasified scum of inorganic material melts in the form of inert lavic rock, non toxic, with very little reaction to lye; the heavy metals are incorporated and made totally inert in the vitreous matrix thereof, and fall into the tank 506.

In the first reactor 50 the fuel introduced can also contain dangerous substances, such as for example chlorinated substances, polychloro-biphenyls, asbestos, packaging, even contaminated, etc., since a total disintegration of the molecules is obtained and conditions are not created for the formation of other dangerous substances.

If the humidity of the fuel is not sufficient, water is injected into the reactor 50.

The plasma torches 507 are fed with pure oxygen at high pressure produced in the same production plant 57 or purchased directly on the market.

The steam reacts with the carbon molecules generating the synthesis gas, essentially consisting of hydrogen and carbon oxide, plus smaller percentages of carbon dioxide, nitrogen, methane.

The synthesis gas produced in the first reactor 50 is conveyed through the connection pipe 514 into the chamber 513 to be injected through the injectors 515, at a temperature of about 1500-2000 °C, into the second tower 511.

The second type of combustible material MC2 is introduced into the second tower 511 through the introduction pipe 512 and, if necessary, water is injected to achieve the reactions to produce the gas. The combustible material MC2 descends into the tower 511 progressively heating up as it meets the current of hot gases introduced by means of the injectors 515 on several levels.

Gasification occurs at a temperature of about 1200-1600 °C.

The second reactor 51 is also equipped with supplementary oxyhydrogen torches 517 to regulate the temperatures. In this case too the second combustible material MC2 introduced is subjected to the reaction of the carbon together with the steam, forming synthesis gas, which is discharged through the connection pipe 524 and melts the inorganic compounds made of vitreous material collected in the bottom tank 516.

The gas is then introduced into the tower 521 of the third reactor 52, through the injectors 525 where the same reactions take place but at lower temperatures, about 800-1000°C. The gas is injected in this case at a temperature of about 800-1000°C. The water and the third combustible material MC3 are introduced into the tower 521 from above, through the introduction pipe 522, and as the third combustible material MC3 descends, it is gasified to be discharged through an outlet pipe 528, also connected to the tower. The third reactor 52 is also equipped with supplementary burners, such as for example oxyhydrogen torches 527, able to possibly regulate the temperatures.

The residues of the third reactor 52, deposited in the tank 526, can possibly be put back into circulation, through pipes not shown in the drawings, in the second reactor 51 to be gasified a second time.

In this case too, the oxyhydrogen torches 527 are fed with the tail gas of the fifth unit 17 that separates the hydrogen and carbon dioxide, or with the synthesis gas produced by the gasification once purified. Alternately, if more economic, auxiliary fuels can be used, such as methane, LPG or other.

According to variants, not shown in the drawings, both the pipe 514 and the pipe 524 and the outlet pipe 528 can be positioned at different heights from those shown in fig. 10.

The choice of the various configurations depends on the chemical-physical characteristics of the combustible material MC1, MC2, MC3 and on the technology of the individual reactors 50, 51, 52.

At outlet from the third unit 15 a mixture of gases is obtained; the main components thereof are *CO, CO*_{*2*} *H*_{*2*}*, H*_{*2*}*O,* in percentages (of volume) that vary according to the type of combustible material input: indicatively 30-40% *H*_{*2*}*,* 20-30% *CO,* 5-15% *CO*_{*2*}*,* 15-30% *H*_{*2*}*O,* plus traces of other minor elements and compounds; of all the compounds the main one, in percentage terms, is hydrogen.

According to a variant, at outlet from the first reactor 50 and the second reactor 51 there is a by-pass device which allows, if necessary, to divert the flow of gas, partly or totally, to the fourth unit 16.

The three reactors 50, 51, 52, can work in series or independently, so as to allow one or two of them to be stopped without having to stop the whole plant 10.

In normal serial functioning, wherein the flows of gas pass through all three reactors 50, 51, 52 a heat saving is achieved, needed to support the gasification endothermic reactions, that can be estimated at about 50% of need.

The plant 10 is also controlled by an information program able to detect and correct the temperature gradients in the three reactors, exploiting the latent heat in cascade.

The mixture of gases at outlet from the series of reactors 50, 51, 52 is at very high temperature, about 800 °C, and is transmitted to the fourth unit 16 where it is cooled and purified.

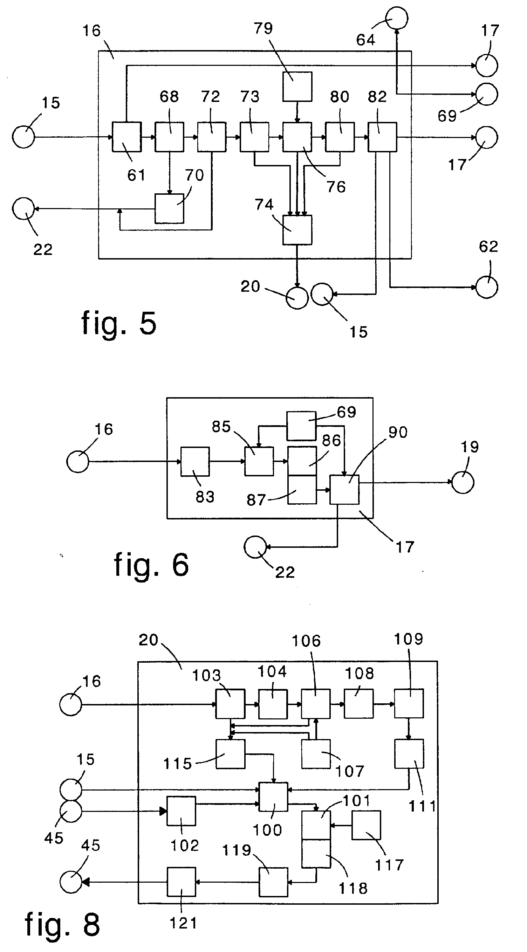

To be more exact, the gas is cooled quickly in a vertical boiler 61 with water pipes of the fourth unit 16 (fig. 5). The heat recovered from the boiler 61 can be used, in a co-generative cycle, to feed a steam turbine 64 to produce electric energy. Alternately, the heat recovered can be exploited inside the plant 10, as described hereafter, for the conversion columns 83 of the fifth unit 17 or to feed an absorption cooling assembly 69.

Subsequently the mixture of gases enters a quencher 68 where it is further cooled by means of injections of fractioned water into the current of gas. The water condensate is removed from the bottom 70 and recycled through the apparatus that accumulates and injects the dirty water 56 of the eighth unit 22.

The mixture of gases exiting from the quencher 68 must be purified of pollutant substances. The choice of technology depends on the composition of the gas and how the clean output gas is used. In this case first of all a demister 72 is provided, to remove the humidity.

From the demister 72, the mixture of gas passes to cyclones 73 able to eliminate the larger particles of powder, which are conveyed to suitable slidable silos 74 where filter materials are deposited. The gas emerging from the cyclones 73 passes to a dry purification chamber 76 into which suitable reagents are injected, contained in storage silos 79, to purify the gas of the pollutant substances, such as for example acids.

The residues of the dry purification are also conveyed to the slidable silos 74 where filter materials are deposited.

The gas emerging from the dry purification chamber 76 passes through sleeve filters 80; in this case too, possible filtration residues are collected on the bottom and conveyed to the slidable silos 74.

To obtain a good purification, the mixture of gas emerging from the sleeve filters 80 is made to pass through the absorption columns through a bed of active carbons 82.

The purified synthesis gas, at this point, instead of being transferred to the fifth unit 17 for transformation and separation, could be used in a gas turbine 62, or partly used to feed the torches in the reactors 50, 51, 52 of the third unit 15.

In the fifth unit 17 (fig. 6), the fraction of carbon oxide is converted into carbon dioxide. This occurs in one or more suitable conversion columns 83, possibly arranged in series. In every column 83 steam is injected into the current of gases at temperatures that vary from about 200°C to about 600°C and in the presence of catalysts (oxides of copper, iron, etc.); the carbon oxide combines with water to form carbon dioxide and molecular hydrogen: *CO + H*_{*2*}*O → CO*_{*2*} *+ H*_{*2*}

Given that the reactions are exothermal, at outlet from every stage there is a battery of exchangers in order to effect an intermediate cooling of the gas. The gas exiting from the conversion columns 83 is composed mainly of hydrogen and carbon dioxide which must then be separated. This happens in the same fifth unit 17 which comprises a cooling column 85 for the mixture of the two gases, wherein the gas is taken below the dew point allowing to collect the residual condensed humidity. The condensed water is possibly stored in cisterns and sent to the apparatus to accumulate and inject clean water 55 of the eighth unit 22, or if appropriate, sold on the market as distilled water.

The gas is then sent into an accumulation jar 86, compressed in a compression section 87 and sent into a separation column 90 wherein the carbon dioxide is intercepted on an adsorption bed. The adsorption bed consists in this case of micro porous membranes of a ceramic type, lined with carbon and kept at low temperature, for example -50°C; the anhydride is then intercepted, regenerating the saturated bed and then sucked into tanks 92 present in the sixth unit 19 (fig. 7).

Unlike the carbon dioxide, the pure hydrogen passes through the adsorbent bed and is sucked into storage tanks 94 also in the sixth unit 19.

The cooling of the adsorbent bed is guaranteed by the aforementioned cooling assembly 69.

The separated technical gases are then stored, as we said, in the tanks 92, 94 by means of respective compression assemblies 92a, 94a in the sixth unit 19 (fig. 7), to then send the hydrogen to the outside 45 to feed means of transport, as a fuel for gas turbines for the production of electric energy, for use inside fuel cells 97 for the production of electric energy, as technical gas in industry, as fuel for heating plants for civil and industrial use, or for re-use in the plant to feed the torches of the reactors 51, 52.

The carbon dioxide can be used in industrial cycles and then given up as a technical gas.

From the separation column 90, as a residue of the process, tail gas remains, estimated to be about 20% of the volume, which still possesses a fair amount of calorific power that can be exploited. The gas can be exploited directly to feed the reactors or in a gas turbine producing electric energy. The gas exiting from the gas turbine is then at high temperature (more than 500 °C), so that its heat can be recovered in an exchanger in order to produce steam that can be used in a steam turbine (and produce electric energy), or re-circling the steam inside the third reactor 52, increasing the gasification yield.

The seventh unit 20 (fig. 8), on the contrary, is able to collect all the waste and residues from the various transformations in the plant 10. The vitrified residues are extracted from the bottom of the reactors 50, 51, 52 through the aforementioned slidable silo 60 and, through suitable transporters 100, are transferred into metering hoppers 101. The plant also provides to process inert materials arriving from the outside 45, so that other horizontal slidable silos are provided in order to receive and store entering materials; these too are transferred by means of transporters 102 to the metering hoppers 101. The residues of the processes to purify the gases in the fourth unit 16 and accumulated in the silos 74 pass through a hopper and homogenizer 103, and are then transferred, by means of a metering screw 104, to helical mixers 106 inside which possible chemical products are also introduced, suitably stored in silos 107, which allow to obtain a completely inert product. The mixed material is made into pellets in suitable apparatuses 108 and, through a possible washing station 109, stored in a slidable silo 111; from the silo 111, the material is transferred to the metering hoppers 101 by means of the transporters 100.

Any possible powder emissions into the atmosphere deriving from this activity are captured by a suitable plant 115 which captures the powders from the hopper 103, from the mixers 106 and from the silos 107, and damps them down. The powders captured by the plant 115 are then recycled inside the seventh unit 20 itself.

The plant is configured so as to be able to receive also loose aggregate material which is transferred to the metering hoppers 101 by a loading system from a pit 117. Each metering hopper 101 is equipped with a weighing and metering system 118 for an accurate control of the percentages of inert materials present in the mixture. Conveyor belts 120 feed a helical mixer 121 from which the mixture of inert materials exits, ready to be destined to the established uses.

It is clear, however, that modifications and/or additions of parts may be made to the plant 10 as described heretofore, without departing from the field of protection of the present invention.

It is also clear that, although the present invention has been described with reference to specific examples, a person of skill in the art shall certainly be able to achieve many other equivalent forms of plant for the production of synthesis gas and separate technical gases, all of which shall come within the field and scope of the present invention.

## Claims

1. Plant for the production of technical gases, such as hydrogen and carbon dioxide, starting from solid refuse, packaging, even contaminated, and from other waste materials, comprising at least a preparation and separation unit (13) to prepare and separate said materials into at least a first and a second sub-group (MC1, MC2) according to pre-determined parameters, and at least a gasification unit (15) arranged downstream of said preparation and separation unit (13) and provided with at least a first reactor (50) into which said first sub-group (MC1) of materials is able to be introduced in order to be gasified by means of comburent means, **characterized in that** said gasification unit (15) comprises at least a second reactor (51) arranged in series and connected to said first reactor (50) and into which said second sub-group (MC2) of materials is able to be introduced, and **in that** introduction means (515) are provided to introduce the gases produced by said first reactor (50) into said second reactor (51).

2. Plant as in claim 1, wherein each of said first and said second reactor (50, 51) comprises a tower (501, 511) associated with burner means (507, 517), **characterized in that** said introduction means comprise injector means (515) associated with said second reactor (51) and at least a pipe (514) able to connect the tower (501) of said first reactor (50) with said injector means (515).

3. Plant as in any claim hereinbefore, wherein said preparation and separation unit (13) is able to separate said materials into at least a third sub-group (MC3), **characterized in that** said gasification unit (15) comprises at least a third reactor (52) arranged in series and connected to said second reactor (51) and into which said third sub-group (MC3) of materials is able to be introduced, and **in that** introduction means are provided to introduce the gases produced by said second reactor (51) into said third reactor (52).

4. Plant as in any claim hereinbefore, **characterized in that** said first reactor (50) is able to operate at a temperature higher than the temperature of said second reactor (51).

5. Plant as in claim 4, **characterized in that** said second reactor (51) is able to operate at a temperature higher than the temperature of said third reactor (52).

6. Plant as in any claim hereinbefore, **characterized in that** said first reactor (50) is able to operate at a temperature of about 3000-4000°C.

7. Plant as in any claim hereinbefore, **characterized in that** said second reactor (51) is able to operate at a temperature of about 1200-1600°C.

8. Plant as in claim 3, **characterized in that** said third reactor (52) is able to operate at a temperature of about 800-1000°C.

9. Plant as in any claim hereinbefore, **characterized in that** said preparation and separation unit (13) comprises shredding means (31) for the homogenization of said materials, mixing means for said shredded materials, demetalizing means (32) for said materials, and storage means for at least said first (MC1) and said second sub-group (MC2) of materials.

10. Plant as in any claim hereinbefore, able to be connected to an information network for the collection of said materials, **characterized in that** a plurality of transmission units are provided, able to transmit, by a user, a request for a differentiated collection of determinate materials already selected according to said pre-determined parameters, and **in that** an operating center (27) connected to said transmission units is able to receive and coordinate the different request signals in order to prepare a relative collection of said materials already separated into said first and said second sub-group (MC1, MC2).

11. Plant as in any claim hereinbefore, **characterized in that** it comprises an auxiliary service unit (22) connected to said gasification unit (15) and comprising means for the production of comburent means (57) and means to accumulate water (55, 56) able to be sent at least to said first, second and third reactor (50, 51, 52).

12. Plant as in any claim hereinbefore, **characterized in that** it comprises a unit (20) to make the materials inert connected to said gasification unit (15) and able to make reusable the solid vitrified residues produced during the gasification of said materials.

13. Plant as in any claim hereinbefore, **characterized in that**, downstream of said gasification unit (15), it comprises a purification unit (16) able to purify the gases produced, said purification unit (16) comprising at least cooling means (68) to cool said gases, condensation means (72), filter means (73) and/or separation means (80) to separate polluting elements.

14. Plant as in claims 11 and 13, **characterized in that** it comprises connection means able to connect said purification unit (16) to said auxiliary service unit (22), in order to send the water produced by said condensation means (72) to said means to accumulate water (55, 56).

15. Plant as in any claim hereinbefore, comprising a transformation and separation unit (17) to transform and separate said mixture of gases, **characterized in that** said transformation and separation unit (17) comprises conversion means (83) provided with catalyst means able to convert carbon monoxide into carbon dioxide.

16. Plant as in claim 15, **characterized in that** said transformation and separation unit (17) comprises holding means (85) to hold the carbon dioxide by means of cold adsorption in order to separate it from the hydrogen, and suction means (87) able to absorb the hydrogen and convey it into corresponding first accumulation units (92).

17. Plant as in claim 16, **characterized in that** said transformation and separation unit (17) comprises desorption means able to have the carbon dioxide desorbed by said holding means (85) and conveyor means able to convey the carbon dioxide into corresponding second accumulation units (94).

18. Method for the production of technical gases, such as hydrogen and carbon dioxide, starting from solid refuse, packaging, even contaminated, and from other waste materials, wherein in at least a preparation and separation unit (13) said materials are prepared and separated into at least a first and a second sub-group (MC1, MC2) according to pre-determined parameters, and in that said first sub-group (MC1) of materials is introduced into at least a gasification unit (15) arranged downstream of said preparation and separation unit (13) and provided with at least a first reactor (50), to be gasified by comburent means, **characterized in that** said second sub-group (MC2) of materials is introduced into at least a second reactor (51) of said gasification unit (15), which is arranged in series and connected to said first reactor (50), and **in that** the gases produced by said first reactor (50) are introduced into said second reactor (51).

19. Method as in claim 18, **characterized in that** the gases produced by said second reactor (51) are introduced into a third reactor (52) of said gasification unit (15).
